# EUROPÄISCHE PATENTANMELDUNG

(11) **EP 0 832 832 A1**
(43) Veröffentlichungstag der Anmeldung: **01.04.1998**
(21) Anmeldenummer: 97115859.7
(22) Anmeldetag: 12.09.1997
(51) Int. Cl.: B65G 67/60

(54) **Vorrichtung zum kontinuierlichen Entladen von Losgut**

(30) Priorität: 26.09.1996 DE 19639534
(71) Anmelder: Krupp Fördertechnik GmbH, 45143 Essen (DE)
(72) Erfinder: Steckel, Horst, 66386 St. Ingbert (DE); Arend, Jürgen, 66123 Saarbrücken (DE)

(57) **Zusammenfassung**

Bei einer Vorrichtung zum kontinuierlichen Entladen von Losgut aus Schiffen (1), die auch zur Beladung der Schiffe (1) verwendbar ist, mit einem parallel zu dem Schiff (1) verfahrbaren, mit einem Drehteil (3) versehenen Portal (2) und einem darauf angeordneten, mit einem Auslegerband (5) versehenen heb-, senk- und schwenkbaren Ausleger (4), ist an der Spitze des Auslegers (4) ein Schalenelevator (6) angebracht, der an seinem unteren Umlenkende Zuführ- und Stopfschnecken (8) aufweist. Der Schalenelevator (6) ist über eine Halterung (11) an dem Ausleger (4) befestigt. Diese Halterung (11) weist zwei Drehpunkte (10.1, 10.2) auf, wobei die Halterung (11) mit einem Drehpunkt (10.1) an dem Ausleger (4) und mit dem andere Drehpunkt (10.2) an einem Parallellenker (12) befestigt ist. Die beiden Drehpunkte (10.1, 10.2) bilden zwei Ecken eines Parallelogramms, dessen beide anderen Ecken zwei weitere Drehpunkte (10.3, 10.4) bilden, die eine Verbindung des Auslegers (4) und des Parallellenkers (12) mit dem Drehteil (3) des Portals (2) darstellen.

## Beschreibung

Vorrichtung zum kontinuierlichen Entladen von Losgut aus Schiffen oder sonstigen Behältnissen, beispielsweise Waggons o. dgl., die auch zur Beladung der Schiffe und der sonstigen Behältnisse verwendbar ist, mit einem parallel zu dem Schiff bzw. dem sonstigen Behältnis verfahrbaren, mit einem Drehteil versehenen Portal und einem darauf angeordneten, mit einem Auslegerband versehenen heb-, senk- und schwenkbaren Ausleger.

Bisher werden je nach Einsatzfall und Kundenvorstellung in Abhängigkeit von der jeweiligen Schiffsgröße und Förderleistung sowie insbesondere unter Berücksichtigung der Art und Beschaffenheit des zu fördernden Losgutes sowie unter Berücksichtigung der ständig steigenden Anforderungen des Umweltschutzes sowohl beim Entladen als auch beim Beladen von Schiffen oder sonstigen Behältnissen die unterschiedlichsten Vorrichtungen eingesetzt.

Bekannte Vorrichtungen zum kontinuierlichen Entladen von Losgut aus Schiffen oder sonstigen Behältnissen sind entweder nicht auch zur Beladung geeignet oder sind sehr aufwendig. Sie haben beispielsweise ein sehr hohes Gewicht und/oder einen hohen Energieverbrauch und erfordern einen erheblichen Wartungsaufwand und somit hohe Betriebskosten.

Der Erfindung liegt die Aufgabe zugrunde, eine Vorrichtung zu schaffen, die nicht nur zum Entladen, sondern auch zum Beladen von Schiffen oder sonstigen Behältnissen verwendet werden kann, so daß die gleiche Vorrichtung für möglichst viele Anwendungsfälle geeignet ist. Die Vorrichtung soll bei unterschiedlichen Schiffsgrößen sowie bei unterschiedlichen örtlichen Gegebenheiten und Förderleistungen verwendet werden können. Mit der Vorrichtung soll ferner eine Vielzahl von Materialien unterschiedlichster Art und Beschaffenheit unter Berücksichtigung der Forderungen des Umweltschutzes, also beispielsweise mit möglichst geringem Energiebedarf, entladen oder beladen werden können. Darüber hinaus soll das Losgut weitgehend gegen Umwelteinflüsse geschützt sein.

Die Lösung der gestellten Aufgabe besteht bei einer Vorrichtung der eingangs genannten Art darin,
- daß an der Spitze des Auslegers ein Schalenelevator angebracht ist, der an seinem unteren Umlenkende Zuführ- und Stopfschnecken aufweist,
- daß der Schalenelevator über eine Halterung an dem Ausleger befestigt ist,
- daß die Halterung zwei Drehpunkte aufweist, wobei die Halterung mit einem Drehpunkt an dem Ausleger und mit dem anderen Drehpunkt an einem Parallellenker befestigt ist, und wobei die beiden Drehpunkte zwei Ecken eines Parallelogramms bilden, dessen beide anderen Ecken zwei weitere Drehpunkte bilden, die eine Verbindung des Auslegers und des Parallellenkers mit dem Drehteil des Portals darstellen,
- und daß einer der beiden an dem Drehteil des Portals vorgesehenen Drehpunkte mit der Heb- und Senkachse des Auslegers zusammenfällt.

Durch die Zuführ- und Stopfschnecken der erfindungsgemäßen Vorrichtung, die am unteren Umlenkende des Schalenelevators - also unmittelbar im Materialaufnahmebereich - angeordnet sind, und deren Länge der jeweiligen Förderleistung angepaßt sind, wird bei der Entladung des Schiffes oder des sonstigen Behältnisses das zu entladende Losgut ständig dem Schalenelevator zugeführt, so daß stets eine maximale und gleichmäßige Füllung der einzelnen Schalen des Schalenelevators mit Losgut erreicht wird. Durch den Schalenelevator wird dann das Losgut hochgetragen.

Durch die Art der Befestigung des Schalenelevators an dem Ausleger der Vorrichtung ist gewährleistet, daß der Schalenelevator stets genau senkrecht steht, während die Zuführ- und Stopfschnecken eine waagerechte Lage zum Boden des Schiffes oder des sonstigen Behältnisses einnehmen. Durch die Bewegung des unteren Endes des Schalenelevators parallel zum Boden des Schiffes oder des sonstigen Behältnisses wird bei gleichzeitigem taktweisen Absenken des Auslegers das zu entladende Losgut lagenweise in einer von der Länge der Zuführ- und Stopfschnecken bestimmten Breite flächenmäßig abgetragen, ohne daß durch Handarbeit vorzunehmende Kickoutbewegungen ausgeführt werden müssen.

Die Bewegung des unteren Endes des Schalenelevators parallel zum Boden des Schiffes oder des sonstigen Behältnisses sowie die taktweise Abwärtsbewegung des Auslegers stellen - abgesehen von den Bewegungen der Förderelemente - die einzigen Arbeitsbewegungen der Vorrichtung während der Abtragung einer Materiallage dar, so daß sich eine erhebliche Energieersparnis ergibt. Außerdem werden für die Ausführung der Bewegungen des Schalenelevators keine Hydraulikzylinder benötigt.

In Ausgestaltung der Erfindung ist die Verbindung des Schalenelevators mit der Halterung durch zwei übereinander angeordnete Schwenklager gebildet, deren Achsen die Schwenkachse des Schalenelevators bilden, wobei nach einem weiteren Merkmal der Erfindung die Schwenkachse einen Drehpunkt der Halterung kreuzt. Durch diese Ausgestaltung der Vorrichtung entfällt die sonst erforderliche Geradhalteplattform mit Kugeldrehverbindung und Wendelschurre.

Die zwischen dem Schalenelevator und der Halterung vorgesehenen Schwenklager ermöglichen eine Schwenkbewegung des Schalenelevators zum Ausleger von ± 90°. Erfindungsgemäß ist zum Schwenken des Schalenelevators um die Schwenkachse ein Drehantrieb vorgesehen. Die Schwenkbewegung kann aber auch mittels eines Zylinders bewirkt werden.

Durch die erfindungsgemäße Ausgestaltung ist die Vorrichtung bei Handbetrieb von dem Geräteführer leicht zu überwachen, währen der Automatikbetrieb nur von wenigen Parametern abhängig ist, wie Schwenkwinkel und Absenktiefe. Hierfür kann eine einfache und unkomplizierte Steuerung eingesetzt werden.

Eine Verbesserung der erfindungsgemäßen Einrichtung wird dadurch erzielt, daß für die Übergabe des aus dem Schiff oder dem sonstigen Behältnis entladenen Losgutes von dem Schalenelevator auf das Auslegerband ein Schneckenförderer vorgesehen ist, der seitlich aus dem Schalenelevator herausragt und sich bis zum Auslegerband erstreckt. Der Schneckenförderer transportiert das durch Gravitation von den Schalen des Schalenelevators herabfallende Losgut aus dem Schalenelevators auf das Auslegerband.

In weiterer Ausgestaltung der erfindungsgemäßen Vorrichtung ist das Auslegerband als Aerobelt ausgebildet.

Durch die Ausgestaltung des Auslegerbandes als Aerobelt ergeben sich für die erfindungsgemäße Vorrichtung erhebliche Kombinationseffekte. So sind aufwendige Bandeinhausungen nicht mehr erforderlich. Ferner wird eine einfache leichtere Bandbrückenkonstruktion ermöglicht. Wegen der geringeren Windlasten können die Brückenabstützungen leichter ausgebildet werden. Es sind keine Wartungsstege zwischen Antriebs- und Spannstation mehr erforderlich. Der sonst ständige Austausch von funktionsuntüchtigen Tragrollen entfällt und es ist keine Ersatzteilhaltung für Tragrollen mehr erforderlich. Der Wartungsaufwand ist wegen fehlender beweglicher Teile minimal. Die Standzeit des Auslegerbandes ist wesentlich größer, weil der Verschleiß des Bandes, das von einem Luftfilm getragen wird, nur gering ist. Trotz des benötigten Ventilators für die Erzeugung des erforderlichen Luftdrucks unter dem Aerobelt ist der Energieverbrauch geringer als bei einem Auslegerband üblicher Bauart. Es ergeben sich erheblich kürzere Bandlängen bei ansteigenden Bändern, da um 2 bis 3° steilere Transportwinkel möglich sind. Wegen der möglichen höheren Geschwindigkeiten des Aerobelts kann das Auslegerband erheblich schmaler ausgebildet werden. Ferner ergeben sich durch die Modulbauweise kürzere Montagezeiten und geringere Montagekosten.

Um die Vorrichtung in einfacher Weise auch für das Beladen von Schiffen oder sonstigen Behältnissen verwendbar zu machen, ist das Auslegerband reversibel betreibbar. Ferner kann für das Beladen parallel zum Schalenelevator ein Beladerohr oder eine Wendelrutsche vorgesehen sein.

Eine Weiterbildung der erfindungsgemäßen Vorrichtung besteht darin, daß der an der Spitze des Auslegers angebrachte Schalenelevator an seinem unteren Umlenkende zwei quer zu dem Schalenelevator angeordnete und sich diametral gegenüberliegende, mit einem Antrieb versehene Zuführ- und Stopfschneckenpaare aufweist, wobei die beiden Schnecken jedes Zuführ- und Stopfschneckenpaares gegenläufig zueinander arbeiten.

Die Schnecken der Zuführ- und Stopfschneckenpaare ermöglichen die Materialaufnahme längs und quer zur Schneckenachse in beiden Richtungen und auch bei Drehbewegungen, ohne ein Materialschild mit der aufwendigen Steuerung. Sie können dadurch jede Ecke im Schiffsraum erreichen. Die Schnecken werden mit kleinerem Durchmesser als üblich ausgeführt, und zwar derart, daß sie lediglich den erforderlichen Füllgrad aufweisen.

Die Erfindung ist anhand der Zeichnung, in der ein Ausführungsbeispiele der erfindungsgemäßen Vorrichtung schematisch dargestellt ist, näher erläutert. Es zeigen:
- Fig. 1: eine Vorrichtung in Seitenansicht, wobei mehrere Stellungen des Auslegers und des Schalenelevators der Vorrichtung angedeutet sind;
- Fig. 2: den Schalenelevator der in Fig. 1 dargestellten Vorrichtung mit seinen Anschlußstellen zum Ausleger der Vorrichtung, in größerem Maßstab;
- Fig. 3: den in Fig. 2 dargestellten Schalenelevator der Vorrichtung in Frontansicht.

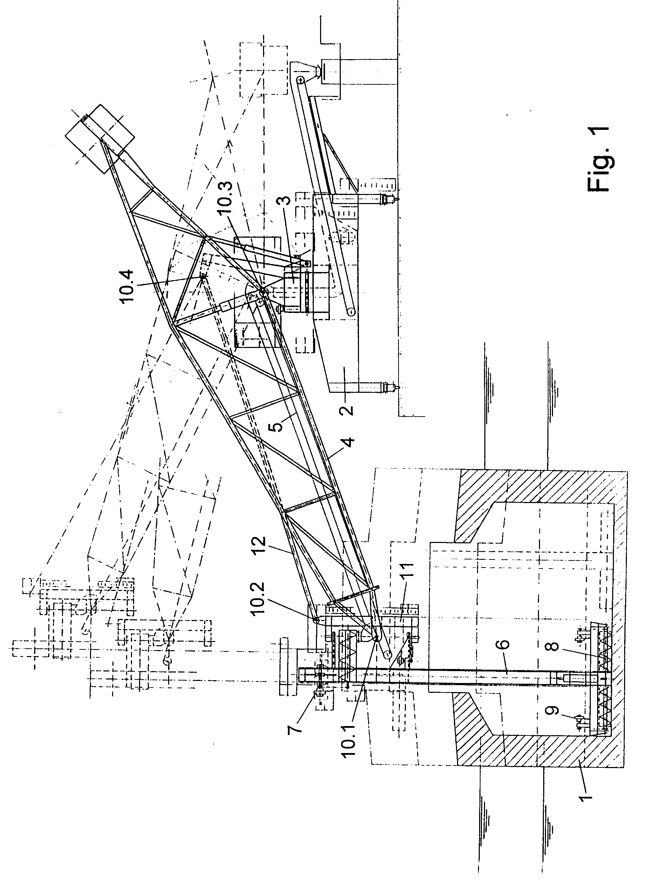

In Fig. 1 ist die erfindungsgemäße Vorrichtung bei der Entladung von Losgut aus einem Schiff 1 dargestellt. Die Vorrichtung besteht im wesentlichen aus einem parallel zu dem Schiff 1 verfahrbaren Portal 2 mit einem Drehteil 3 und einem darauf angeordneten heb-, senk- und drehbaren Ausleger 4 mit einem Auslegerband 5. An der Spitze des Auslegers 4 ist ein Schalenelevator 6 angebracht. Der Schalenelevator 6, der mit einem Elevatorantrieb 7 versehen ist, weist an seinem unteren Umlenkende Zuführ- und Stopfschnecken 8 auf, die quer zu dem Schalenelevator 6 angeordnet und mit Schneckenantrieben 9 versehen sind.

Der Schalenelevator 6 ist über eine Halterung 11 an dem Ausleger 4 befestigt. Die Halterung 11 weist zwei Drehpunkte 10.1 und 10.2 auf. Mit einem Drehpunkt 10.1 ist die Halterung 11 an dem Ausleger 4 und mit dem anderen Drehpunkt 10.2 an einem Parallellenker 12 befestigt. Die beiden Drehpunkte 10.1 und 10.2 bilden zwei Ecken eines Parallelogramms, dessen beide anderen Ecken zwei weitere Drehpunkten 10.3 und 10.4 bilden, die eine Verbindung des Auslegers 4 und des Parallellenkers 12 mit dem Drehteil 3 des Portals 2 darstellen. Der die Verbindung des Auslegers 4 mit dem Drehteil 3 des Portals 2 bildende Drehpunkt 10.3 bildet gleichzeitig die Hub- und Senkachse des Auslegers 4.

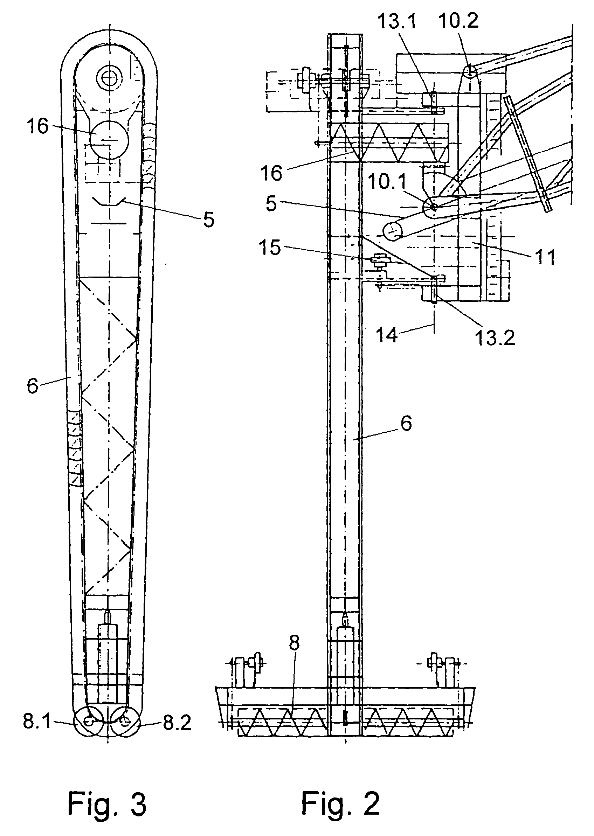

Für die Verbindung des Schalenelevators 6 mit der Halterung 11 dienen - wie Fig. 2 zeigt - zwei übereinander angeordnete Schwenklager 13.1 und 13.2, deren Schwenkachse 14 den Drehpunkt 10.1 der Halterung 11 kreuzt. Für das Schwenken des Schalenelevators 6 um die Schwenkachse 14 ist ein Drehantrieb 15 vorgesehen.

Zwischen dem Schalenelevator 6 und dem als Aerobelt ausgebildeten Auslegerband 5 ist ein Schneckenförderer 16 angeordnet.

Zuführ- und Stopfschnecken 8 durch zwei Schneckenpaare gebildet, wobei die Schnecken 8.1 und 8.2 der beiden Schneckenpaare gegenläufig zueinander arbeiten.

## Patentansprüche

1. Vorrichtung zum kontinuierlichen Entladen von Losgut aus Schiffen oder sonstigen Behältnissen, beispielsweise Waggons o. dgl., die auch zur Beladung der Schiffe und der sonstigen Behältnisse verwendbar ist, mit einem parallel zu dem Schiff bzw. dem sonstigen Behältnis verfahrbaren, mit einem Drehteil versehenen Portal und einem darauf angeordneten, mit einem Auslegerband versehenen heb-, senk- und schwenkbaren Ausleger,
**dadurch gekennzeichnet**,
1.1 daß an der Spitze des Auslegers (4) ein Schalenelevator (6) angebracht ist, der an seinem unteren Umlenkende Zuführ- und Stopfschnecken (8) aufweist,
1.2 daß der Schalenelevator (6) über eine Halterung (11) an dem Ausleger (4) befestigt ist,
1.3 daß die Halterung (11) zwei Drehpunkte (10.1, 10.2) aufweist, wobei die Halterung (11) mit einem Drehpunkt (10.1) an dem Ausleger (4) und mit dem anderen Drehpunkt (10.2) an einem Parallellenker (12) befestigt ist, und wobei die beiden Drehpunkte (10.1, 10.2) zwei Ecken eines Parallelogramms bilden, dessen beide anderen Ecken zwei weitere Drehpunkte (10.3, 10.4) bilden, die eine Verbindung des Auslegers (4) und des Parallellenkers (12) mit dem Drehteil (3) des Portals (2) darstellen,
1.4 und daß einer der beiden an dem Drehteil (3) des Portals (2) vorgesehenen Drehpunkte mit der Heb- und Senkachse (10.3) des Auslegers (4) zusammenfällt.

2. Vorrichtung nach Anspruch 1, dadurch gekennzeichnet, daß die Verbindung des Schalenelevators (6) mit der Halterung (11) durch zwei übereinander angeordnete Schwenklager (13.1, 13.2) gebildet ist, deren Achsen die Schwenkachse (14) des Schalenelevators (6) bilden.

3. Vorrichtung nach Anspruch 1 oder 2, dadurch gekennzeichnet, daß die Schwenkachse (14) des Schalenelevators (6) einen Drehpunkt (10.2) der Halterung (11) kreuzt.

4. Vorrichtung nach Anspruch 1, 2 oder 3, dadurch gekennzeichnet, daß zum Schwenken des Schalenelevators (6) um die Schwenkachse (14) ein Drehantrieb (15) vorgesehen ist.

5. Vorrichtung nach einem der Ansprüche 1 bis 4, dadurch gekennzeichnet, daß für die Übergabe des aus dem Schiff (1) oder dem sonstigen Behältnis entladenen Losgutes von dem Schalenelevator (6) auf das Auslegerband (5) ein Schneckenförderer (16) vorgesehen ist, der seitlich aus dem Schalenelevator (6) herausragt und sich bis zum Auslegerband (5) erstreckt.

6. Vorrichtung nach einem der Ansprüche 1 bis 5, dadurch gekennzeichnet, daß das Auslegerband (5) als Aerobelt ausgebildet ist.

7. Vorrichtung nach einem der Ansprüche 1 bis 6, dadurch gekennzeichnet, daß die an dem unteren Umlenkende des Schalenelevators (6) angebrachten Zuführ- und Stopfschnecken (8) durch zwei quer zu dem Schalenelevator (6) angeordnete und sich diametral gegenüberliegende, mit einem Antrieb versehene Schneckenpaare gebildet sind, wobei die beiden Schnecken (8.1, 8.2) jedes Schneckenpaares gegenläufig zueinander arbeiten.
